Europäisches Patentamt

(19) European Patent Office

Office européen des brevets

(11) EP 0 769 753 A1

## (12) EUROPEAN PATENT APPLICATION

(43) Date of publication:
23.04.1997 Bulletin 1997/17

(51) Int. Cl.6: G06K 7/10

(21) Application number: 95202846.2

(22) Date of filing: 20.10.1995

(84) Designated Contracting States:
AT BE CH DE DK ES FR GB GR IE IT LI LU MC NL PT SE

(71) Applicant: OPTICON SENSORS EUROPE B.V.
2132 NG Hoofddorp (NL)

(72) Inventor: Peng, Ke-Ou
NL-2612 KV Delft (NL)

(74) Representative: de Bruijn, Leendert C.
Nederlandsch Octrooibureau
P.O. Box 29720
2502 LS Den Haag (NL)

(54) **Optical scanner with array of photosensors parallel to optical axis**

(57) Optical scanner comprising:

- at least one light source (101; 101a, 101b) for generating at least one light beam (B; Ba, Bb);
- illuminating means for focusing said at least one light beam and for producing at least one illumination line in a working plane (F) substantially perpendicular to an optical axis (x) of the scanner, in which an object to be scanned may be situated;
- imaging optics arranged on said optical axis (x) and arranged for receiving light back scattered by said object and for producing an optical image of said object;
- an array of photo-sensors (6) arranged parallel to the optical axis (x) and arranged for receiving said optical image from said imaging optics and converting it into electrical signals;
- deflecting means (11; 12; 20, 21; 30, 31; 300) arranged for receiving said optical image from said imaging means and deflecting it to said array of photo-sensors (6).

fig-10

## Description

The present invention relates to an optical scanner comprising at least one light source for generating at least one light beam, illuminating means for focusing the at least one light beam and for producing at least one illumination line in a working range substantially perpendicular to an optical axis of the scanner, in which an object to be scanned may be situated, imaging optics arranged on the optical axis and arranged for receiving light back scattered by the object and for producing an optical image of the object and an array of photo-sensors arranged for receiving the optical image from the imaging optics and converting it into electrical signals.

Such optical scanners with an array of photo-sensors, in which the photo-sensors may be charged couple devices (CCD), have been widely used for bar code reading. One of the main advantages of such optical scanners is that they do not have any rotating or vibrating elements which are often used in active scanners but which complicate their construction.

As is known to a person skilled in the art, the spatial resolution of scanners provided with an array of photo-sensors depends not only on the quality of the optical image on the array of photo-sensors but also on the dimensions of the photo-sensor elements in the array.

In most hand-held optical scanners, a linear array of photo-sensors has been used. In the prior art optical scanners, the array of photo-sensors is aligned along a line substantially parallel to the working plane of the optical scanner, in which the object, e.g. a bar code, to be scanned is to be located. In order to illuminate a bar code with high efficiency, the illumination light over the bar code is, preferably, stripe-shaped. In the prior art optical scanners, this stripe-shaped illumination light is parallel to the array of photo-sensors.

In practice, a compact, handy and light-weighted scanner is always required. Wand-type bar code readers have been applied not only because of their low-cost but also because their very compact size and their pen-like geometrical shape, which is easy to handle. However, since wand-type bar code readers only comprise one single photo sensor, this type of readers must be moved during reading. In contrast, prior art optical scanners with an array of photo-sensors need not be moved since the object can be entirely imaged on the array of photo-sensors. However, the prior art optical scanners with an array of photo-sensors are substantially larger than wand-type bar code readers.

Therefore, it is a primary object of the present invention to provide an optical scanner which combines the advantages of the known wand-type bar code readers and the known optical scanners with an array of photo-sensors, i.e. a scanner, which is small-sized and, at the same time, need not be moved for scanning an object.

In prior art optical scanners with an array of photo-sensors, an array of light sources with focusing optics, imaging optics and an array of photo-sensors are applied. All these elements are mounted in a single housing which is provided with a window. Both the light beam focused by the illuminating optics to the working plane and the optical image from the object to be scanned pass through this window. The window is designed to be close to the working plane which may be defined as the plane in which the best reading of the object to be scanned can be obtained. In other words, in the working plane a high reading resolution can be obtained. In practice, therefore, in operation the window may touch the object to be scanned and then the object will be within the working plane. Thus, the window is used to indicate the working plane to the operator of the optical scanner. Moreover, the window protects the elements of the optical scanner from being polluted by dust, etcetera.

In practice, the object to be scanned may be a bar code. Assuming that the smallest width of a bar code module which can be distinguished by the optical scanner is 0.1 mm and each single bar code module is detected by three photo-sensors, the longest length of the bar code which may be read by 2048 photo-sensor elements is about 68 mm. A typical broadness of the window of prior art bar code scanners is 50-70 mm.

In prior art bar code readers with an array of photo-sensors, the array is arranged normal to the optical axis of the scanner, i.e., parallel to the working plane in which the bar code to be scanned is located. The length of the array of photo-sensors depends on the size of its individual elements, the number of photo-sensors and its package. For a typical array of photo-sensors, used in bar code scanners, having 2048 photo-sensors and with a width of the photo-sensors of 14 micrometer, the length of the array of photo-sensors is about 28 mm. Including a conventional package, the array of photo-sensors then has a length of about 40 mm. Therefore, in prior art optical scanners with an array of photo-sensors the width of the scanner is more than 40 mm.

In order to provide an optical scanner with an array of photo-sensors, which is smaller sized than the prior art optical scanners, the optical scanner according to the invention is characterised in that the array of photo-sensors is arranged substantially parallel to the optical axis and the scanner also comprises deflecting means arranged for receiving the optical image from the imaging means and deflecting it to the array of photo-sensors.

Since in the optical scanner according to the invention the array of photo-sensors is not arranged normal to the optical axis of the scanner but parallel to it the width of the optical scanner according to the invention can be substantially reduced compared to the prior art optical scanners.

The deflecting means used to deflect the optical image received from the imaging means to the array of photo-sensors may comprise any type of deflecting means known from the prior art. However, in one embodiment the deflecting means comprise at least one mirror. Such at least one mirror may be a mirror which is tilted 45° relative to the optical axis of the scanner.

Alternatively, however, the deflecting means may comprise holographic means. The advantage of using holographic means is that, when using a holographic mirror it need not be tilted 45° relative to the optical axis; it can be tilted by any other predetermined convenient angle depending on the manufacturing method, thus giving further possibilities for reducing the size of the optical scanner.

In a further embodiment of the invention the deflecting means comprise a prism arranged for receiving the optical image from the imaging means and a mirror arranged for receiving the optical image from the prism and deflecting it to the array of photo-sensors. In this arrange-ment the prism is used to deflect the optical image from the optical axis before being deflected by the mirror towards the array of photosensors. Thus, the array of photo-sensors may be located closer to the optical axis resulting in the possibility of a further reduced width of the optical scanner.

In an other alternative embodiment, the deflecting means comprise a prism provided with a transparent receiving surface for receiving the optical image from said imaging means and a reflective surface for receiving said optical image from said transparent receiving surface and reflecting it to the array of photo-sensors.

Apart from rearranging the array of photo-sensors within the optical scanner, a further reduction of the size of the scanner may be obtained by reducing the size of the window or omitting it entirely. However, in the prior art optical scanners the window is also used as an indicator of the working plane, as explained above. Therefore, when the window is shifted from the working plane towards the imaging means used, other working plane indicator means for indicating the location of the working plane to an operator of the scanning are needed.

Therefore, it is a further object of the present invention to provide the optical scanner with an array of photo-sensors with suitable working plane indicator means. Such working plane indicator means may be made of the illumination means which are used to illuminate the object to be scanned with one single illumination line. However, preferably, they comprise a first focusing means arranged for focusing a first light beam and producing a first focused light beam which is shaped as a first illumination line in a predetermined plane and a second focusing means arranged for focusing a second light beam and producing a second focused light beam which is shaped as a second illumination line in the predetermined plane, the first and the second focused light beams at least partly overlapping one another in the working plane. Thus, light beams which are necessary to illuminate the object to be scanned are used to show an operator of the optical scanner at what distance from the optical scanner the working plane is located. The operator only has to move the optical scanner in a direction perpendicular to the object to be scanned until the first and second focused light beams at least partly overlap one another.

Such an optical scanner provided with such working plane indicator means may, furthermore, comprise a beam splitter, first optical means, and second optical means, wherein the beam splitter is arranged to split the light beam from a single light source and to produce the first light beam and the second light beam, the first optical means are arranged to direct the first light beam to the first focusing means and the second optical means are arranged to direct the second light beam to the second focusing means.

In an alternative embodiment, the working plane indicator means comprise a leg which is slidable supported by a slot in a housing of the optical scanner and can be pulled out to extend from the housing to the working plane, latching means being provided to latch the leg in its working plane position. When the optical scanner is not used, such a leg can be shifted backwards into the housing, thus, reducing the size of the optical scanner housing when it is not used.

The present invention will now be explained with reference to some drawings which only schematically show the essential parts of the invention and which are not intended to limit its scope.

Figure 1 shows an optical scanner with an array of photo-sensors according to the prior art;
Figures 2 and 3 show different arrangements for producing a single illumination line on a bar code by using one single light source; in these arrangements the illuminating means may also act as working plane indicator means;
Figure 4 shows a top view of alternative working plane indicator means using two light sources and two focusing means for focusing the light beams generated by the light sources;
Figure 5 shows a top view of an alternative arrangement for the figure 4 arrangement, in which the two light beams are generated by one single light source, a beam splitter and suitable optics in combination;
Figures 6 and 7 show a mirror and a hologram, respectively, for deflecting an optical image towards an array of photo-sensors arranged parallel to the optical axis of the optical scanner;
Figures 8 and 9 show further alternatives of deflectors by means of which the size of the optical scanner can be further reduced,
Figure 10 shows the application of a specially shaped prism to deflect an optical image towards the array of sensors arranged parallel to the optical axis of the optical scanner;
Figure 11a and 11b show the application of a mechanical leg as working plane indicator means.

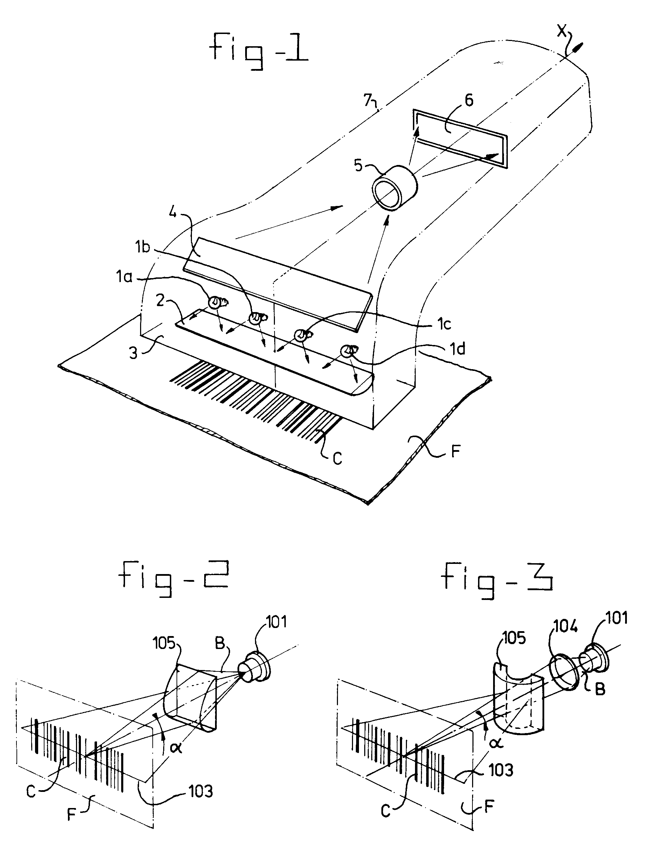

The prior art optical scanner shown in figure 1 comprises several light sources (e.g. LED's) 1a, 1b, 1c and 1d. The illuminating lens (or condenser) 2 receives the light beams generated by the light sources 1a, 1b, 1c and 1d and focuses the light beams towards a working plane F. The optical scanner comprises a housing 7 provided with a window 3 which is transparent for the focused light beams. The working plane of the device is close to the window 3. In figure 1 a bar code C is schematically shown near the window 3 located in the working plane F.

Light scattered back by the bar code C propagates back through the window 3 and the illuminating means 2 towards a mirror 4 which directs the optical image of the bar code C towards imaging optics 5, e.g. a lens or a set of lenses. The imaging optics 5 transmit the optical image of the bar code C to an array of photo-sensors 6 which is oriented in a plane perpendicular to the optical axis 6 of the optical scanner. Note, that in the prior art arrangement shown in figure 1 the optical axis x is bent by the mirror 4. However, this mirror may be omitted.

The array of photo-sensors 6 receives the optical image of the bar code C and converts the optical image into electrical signals which are transmitted to suitable processing means (not shown), which are known to persons skilled in the art and need no further explanation.

The device shown in figure 1 is relatively simple and can be hand-held.

The window 3 is close to the working plane F, i.e., the plane in which objects to be scanned can be read best. The length of window 3 depends on the number of elements in the array of photo-sensors 6. For a typical array of 2048 photo-sensors, assuming the smallest width of a bar code module is 0.1 mm and each single bar code module is detected by three sensors, the largest length of a bar code C can be about 68 mm. Thus, the length of window 3 can not be smaller than 68 mm.

The length of the array of photo-sensors 6 depends on the size and number of photo-sensors in the array. Typically, the width of a single photo-sensor is about 14 micrometer. Using 2048 photo-sensor elements, the length of the array of photo-sensors 6 will be about 28 mm. The photo-sensors are sealed in a package thus resulting in a typical length of about 40 mm.

As can be derived from figure 1, the size of the optical scanner according to the prior art depends on the array of light sources 1a, 1b, 1c, 1d, the condenser 2, the length of window 3 and the length of the array of sensors 6. Typically, the width of a prior art optical scanner with an array of photo-sensors is about 50-70 mm.

As a first step for reducing the size of the optical scanner according to the prior art, the optical scanner according to the present invention may use one single light source 101 only and suitable illuminating means 105 as shown in figure 2. The illuminating means 105 are arranged for receiving the light beam B originating from the light source 101 and focusing it to the working plane F in which the object C is to be located. The illuminating means 105, in the arrangement according to figure 2, comprise a cylindrical lens that produces a strip-shaped illuminating line 103 in the working plane F.

By using the elements shown in figure 2, less elements than in the prior art arrangement are used for illuminating the object C in the working plane F.

As shown in figure 3, suitable optics, like a lens, 104 may be located between the cylindrical lens 105 and the single light source 101.

The lens 104 is mainly used to focus light beam B into an illumination spot in the working plane F, while the lens 105, in contrast to its function in the figure 2 embodiment, is designed not to focus the light beam B but to enlarge this spot to form a strip-shaped illumination line 103.

In the embodiment according to figures 2 and 3, the illuminating means 105 and 104/105, respectively, may also be used as working plane indicator means, as will be explained below. As shown in figure 2, the beam B originating from the light source 101 diverges on its way to the illuminating lens 105. The illuminating lens 105 focuses the beam B to produce a sharp illumination line 103 in the working plane F. Between the illuminating means 105 and the working plane F the beam B converges with an angle $\alpha$. The same applies to the arrangement in accordance with figure 3 be it that in the figure 3 embodiment the illumination means both comprise lens 104 and lens 105.

In the arrangement according to figures 2 and 3 the working plane F is defined as the plane in which the illumination line 103 has the smallest width. Due to light beam B being a converging beam, an object outside the working plane F will not be illuminated with the thinnest illumination line 103 possible. In that cases, the illuminating line will be blurred.

In order to find the best focal plane for the converging beam B easily and clearly, the converging angle $\alpha$ of the illuminating beam B should be as large as possible. In order words, the illuminating means 105 should have a large aperture. The larger the converging angle $\alpha$, the more rapid the width of the illumination line 103 on the object to be scanned increases when that object is shifted from the working plane F towards or away from the optical scanner. Therefore, an operator of the optical scanner can easily establish the working plane F by ascertaining at what distance the illumination line 103 has the smallest width.

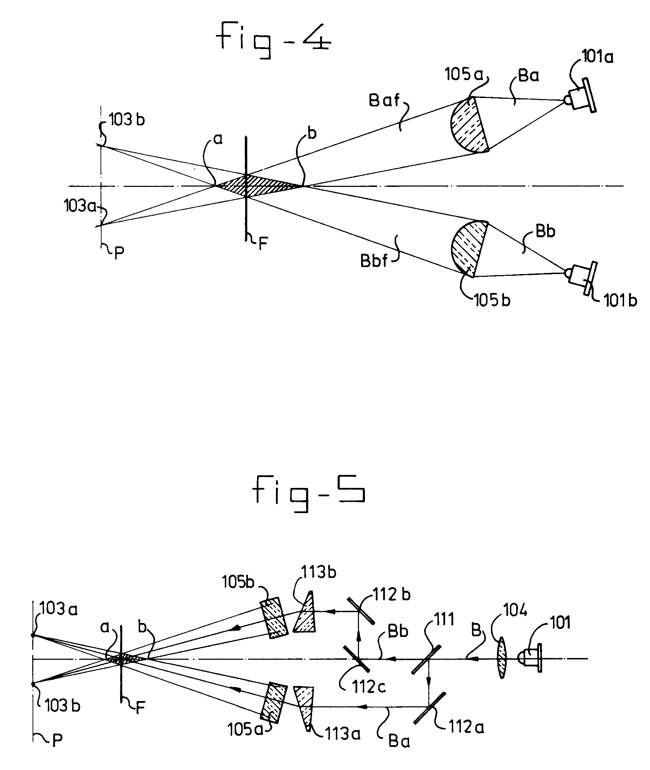

In order to easen the establishment of the working plane F by an operator of the optical scanner, it may be provided with working plane indicator means as shown in figure 4. Figure 4 shows the application of two light sources 101a, 101b. Moreover two illuminating means 105a, 105b are used. The light source 101a produces a light beam Ba and light source 101b produces a light source Bb. Light beam Ba is focused by the illuminating means 105a to produce a illumination line 103a, whereas light beam Bb is focused by illuminating means 105b to produce illumination line 103b. Illumination lines 103a and 103b define the plane P. Illuminating means 105a, 105b may be cylindrical lenses. When illumination lines 103a, 103b are not coinciding, the focused light beams Baf, Bbf transmitted by the illuminating means 105a, 105b will overlap entirely in a plane F not coinciding with plane P. The plane F in which light beam Baf, Bbf overlap entirely is defined as the working plane. Within a range denoted by a-b in figure 4, the light beams Baf, Bbf overlap partly. Within this range a-b a proper reading of an object to be scanned may be reached. In other words, the aperture of the illuminating means 105a, 105b is selected such that the range a-b in which a single illumination line, resulting from the overlap between focused beams Baf, Bbf, can be observed is coincident with the required depth of field of the optical scanner.

Figure 5 shows an arrangement similar to the arrangement of figure 4. However, in the arrangement according to figure 5 instead of two light sources 101a, 101b, a single light source 101 is applied. The arrangement according to figure 5 comprises a lens 104 for focussing the light beam B as required. Moreover, the arrangement comprises a beam splitter 111 which splits light beam B in two separate beams Ba, Bb. The light beam Ba is directed to a mirror 112a, which reflects the beam Ba to a prism 113a. By means of the mirror 112a and the prism 113a the light beam Ba is shaped properly for illuminating means 105a.

The other light beam Bb propagates from the beam splitter 111 towards mirrors 112c, 112b and a prism 113b to produce a properly shaped light beam for illuminating means 105b. The illuminating means 105a, 105b produce illumination lines 103a, 103b which have the smallest width in a plane P and overlap one another entirely in the working plane F. It is to be noted that in the figure 5 embodiment illumination means 105a, 105b are designed not to focus beams Ba, Bb, which are already focussed by focussing lens 104, but to enlarge the spot as shaped by lens 104 in order to produce illumination lines 103a, 103b.

Now, it will be explained how the size of the optical scanner can be further reduced by arranging the array of photo-sensors 6 parallel to the optical axis x of the optical scanner.

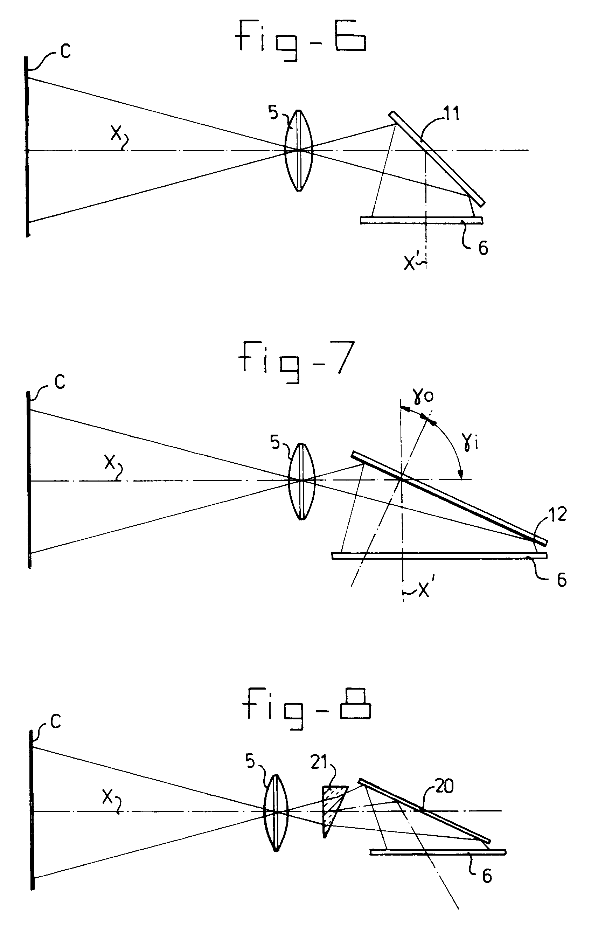

Figure 6 shows light scattered by the object C backwards to the optical scanner and which is collected by suitable imaging means 5. Thus, the imaging means produce an optical image of the object C to be scanned. The optical image is transmitted by the imaging means 5 to a mirror 11 which reflects the optical image to the array of photo-sensors 6. By tilting the mirror 11 45° relative to the optical axis x, as shown in figure 6, the array of photo-sensors 6 can be arranged parallel to the optical axis x. Since the array of photo-sensors 6 is arranged parallel to the optical axis x and the optical image is "folded" the size of the optical scanner can be substantially reduced.

Instead of mirror 11 a holographic reflection optical component 12, as shown in figure 7, may be used. This holographic component 12 can be tilted at any suitable angle with respect to the optical axis x depending on the manufacturing method used. When using a holographic component 12, it need not necessarily be tilted 45° relative to the optical axis x to properly image the optical image to the array of photo-sensors 6, as is known to a person skilled in the art. However, a light ray propagating from the object C towards the imaging means 5 along the optical axis x will be deflecting by the holographic component 12 along a fixed axis x' which is defined by the holographic component used. The holographic component 12 must be arranged such that the latter axis x' is perpendicular to the array of photo-sensors 6.

The transverse magnification M of the holographic component 12 depends on the incident angle of the light ray along the optical axis x, $\gamma_i$, and the corresponding emerging angle, $\gamma_o$:

$$M = \frac{COS\gamma_i}{COS\gamma_o}$$

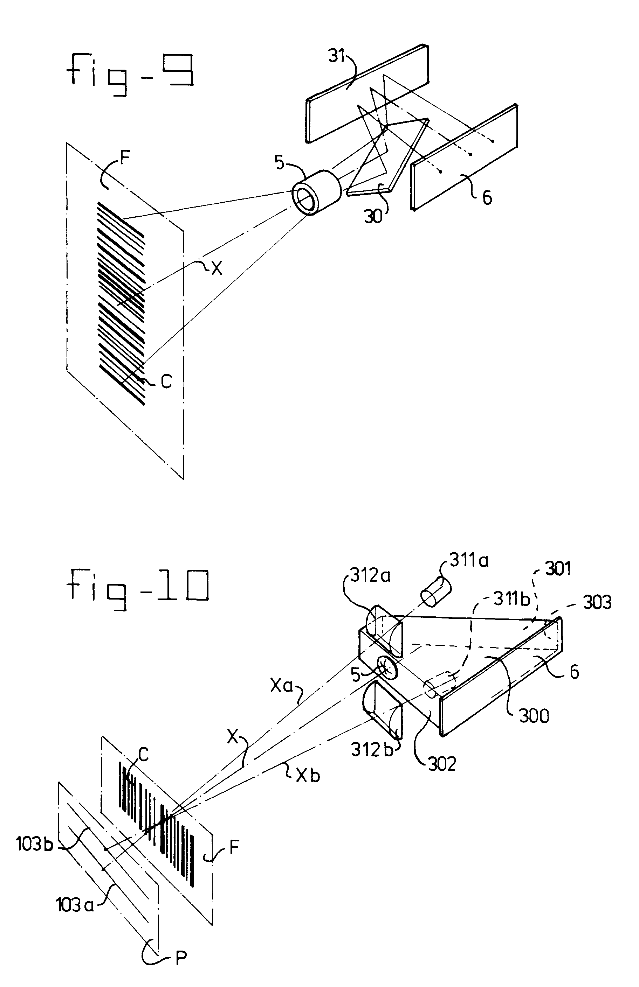

Figures 8 and 9 show further alternative embodiments of deflecting means used for deflecting the optical image of the object C towards the array of photosensors 6 arranged in a parallel relationship to the optical axis x.

The embodiment according to figure 8 comprises a prism 21 which is used to deflect the optical image from the optical axis x towards a mirror 20. The mirror 20 reflects the optical image towards the array of photosensors 6. By firstly deflecting the optical image from the optical axis x before the optical image impings upon the mirror 20, the mirror 20 can have a smaller angle then 45° with respect to the optical axis x. Thus the mirror 20 needs less space then the mirror 11 in the embodiment according to figure 6, seen in a direction perpendicular to the optical axis x. Thus, the size of the optical scanner can be further reduced.

In the embodiment according to figure 9, the optical image transmitted by imaging means 5 is directed to a mirror 30 which reflects the optical image towards another mirror 31 before it reaches the array of photo-sensors 6. Thus, in the arrangement according to figure 9, the optical image is folded in a transverse direction relative to the optical axis x.

Instead of two mirrors 30, 31 other numbers of mirrors can be used. The number and position of the mirrors used to fold the optical path in the optical scanner according to the invention can be optimized such that the transverse dimensions of the optical scanner can be minimized.

Figure 10 shows an embodiment in which a prism 300 is used for deflecting the optical image received from the imaging means 5 towards the array of photosensors 6 arranged parallel to the optical axis x. The arrangement according to figure 10 comprises two light sources 311a, 311b and two illuminating means 312a, 312b. The light sources 311a, 311b and the illuminating means 312a, 312b act in the same way as the light sources 101a, 101b and the illuminating means 105a, 105b of the arrangement in accordance with figure 4 and need no further explanation.

The prism 300 is provided with a receiving surface 302 for receiving the optical image of the object C transmitted by the imaging means 5. The receiving surface 302 is arranged perpendicular to the optical axis x and is transparent. It will, thus, pass substantially the entire optical image. The prism 300 also comprises a reflective surface 301 which receives the optical image after it has passed the receiving surface 302. The reflecting surface 301 is tilted 45° relative to the optical axis x.

The prism 300 comprises an emerging surface 303 which passes the optical image after being reflected by the reflective surface 301 towards the array of photo-sensors 6.

To obtain a large depth of field and to decrease the aberration, a small aperture, typically having a diameter of 2 mm, of the imaging means 5 is required. Due to one-dimensional imaging and the small aperture of the imaging means 5, the prism 300 can be thin, e.g. 5 mm. Assuming that the width of the illuminating means 312a, 312b, which may be cylindrical lenses, is 5 mm, the total thickness (i.e. the size in the vertical direction of the drawing plane of figure 10) of the optical part of the optical scanner is about 15 mm.

For a typical array of photo-sensors with 2048 elements of 14 micrometer each, the length of the array 6 is about 28 mm. The length of the emerging surface 303 may be about 30 mm. Assuming that the image of the object C is at a distance 30 mm away from the imaging means 5, the dimension of the prism in the direction perpendicular to the x-axis and towards the array 6 is about 18 mm. Therefore, assuming that the array 6 has a typical width of 2 mm, the dimension of the optical part in the horizontal direction of the drawing plane of figure 10 is about 20 mm which is substantially smaller than the typical length of 40 mm of a CCD array of 2048 photo-elements.

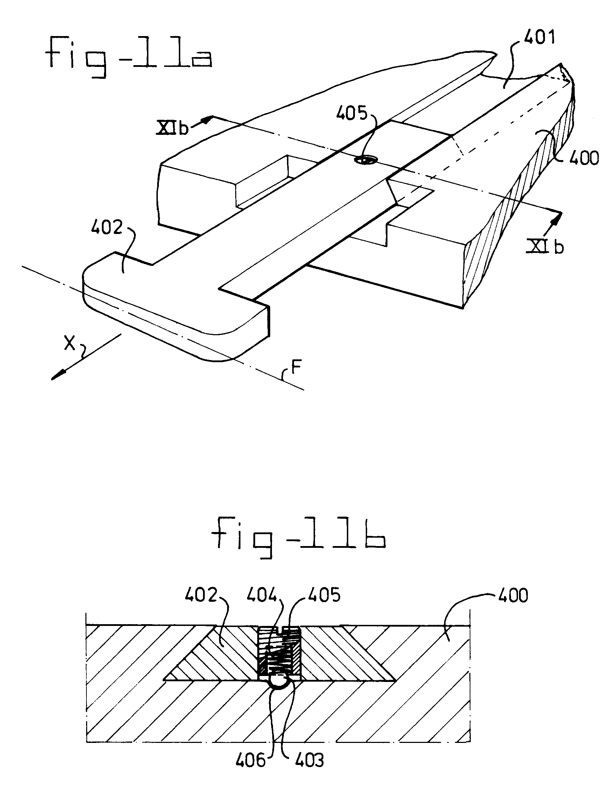

Figures 11a and 11b show a mechanical alternative for the working plane indicator means. In the arrangement shown in figure 11a, the working plane indicator means comprise a leg 402 which can slide in a slot 401 of a housing 400 of the optical scanner in a direction parallel to the optical axis x of the optical scanner.

Preferably the leg 402 is provided with latching means for latching the leg relative to the housing 400 in its working range position. The latching means may comprise a screw 405, a spring 404 and a ball 403. Then, the housing 400 of the optical scanner is provided with a spherical shallow hole 406. The hole 406 is located such that the ball 403 is forced partly into the hole 406 by the spring 404 and the screw 405 at the position of leg 402 in which the front side of the leg lies within the working plane F of the optical scanner. Preferably, when the optical scanner is not used the leg 402 can be shifted inwards along the slot 401 in the housing 400 to prevent the housing 400 from having unnecessary extensions. The housing 400 may be provided with a further hole not shown, similar to the hole 406, for receiving the ball 403 when the leg 402 is shifted entirely inwards. The spring 404 is provided with a bias spring force by the screw 405 such, that only a little force is needed to move the leg 402 from the latch position, i.e. the position in which the ball 403 is received by the hole 406.

Thus, it has been shown that it is possible to provide means for deflecting the optical image of the object to be scanned such that the array of photo-sensors used may be arranged parallel to the optical axis x. This results in a first step to reduce the size of an optical scanner provided with an array of photo-sensors. Moreover, it has been shown that it is possible to further reduce the dimensions of the optical scanner by omitting the window 3 used in the prior art scanners and by substituting this window 3 by suitable working plane indicator means.

## Claims

1. Optical scanner comprising:

   - at least one light source (101; 101a, 101b) for generating at least one light beam (B; Ba, Bb);
   - illuminating means for focusing said at least one light beam and for producing at least one illumination line in a working plane (F) substantially perpendicular to an optical axis (x) of the scanner, in which an object to be scanned may be situated;
   - imaging optics arranged on said optical axis (x) and arranged for receiving light back scattered by said object and for producing an optical image of said object;
   - an array of photo-sensors (6) arranged for receiving said optical image from said imaging optics and converting it into electrical signals;

     characterized in that

   - the array of photo-sensors (6) is arranged substantially parallel to said optical axis (x) and
   - the scanner also comprises deflecting means (11; 12; 20, 21; 30, 31; 300) arranged for receiving said optical image from said imaging means and deflecting it to said array of photo-sensors (6).

2. Optical scanner according to claim 1 wherein the deflecting means comprise at least one mirror (11; 30, 31).

3. Optical scanner according to claim 1 wherein the deflecting means comprise holographic means (12).

4. Optical scanner according to claim 1 wherein the deflecting means comprise a prism (21) arranged for receiving the optical image from the imaging means and a mirror (20) arranged for receiving the optical image from the prism (21) and deflecting it to said array of photo-sensors (6).

5. Optical scanner according to claim 1 wherein the deflecting means comprise a prism (300) provided with a transparent receiving surface (302) for receiving the optical image from said imaging means and a reflective surface (301) for receiving said optical image from said transparent receiving surface (302) and reflecting it to said array of photo-sensors (6).

6. Optical scanner according to any of the preceding claims, furthermore comprising working plane indicator means (105; 104/105; 105a, 105b; 312a, 312b; 400-405) for indicating the location of the working plane (F) to an operator of the scanner.

7. Optical scanner according to claim 6 wherein said working plane indicator means comprise a first focusing means (105a) arranged for focusing a first light beam (Ba) and producing a first focused light beam (Baf) which is shaped as a first illumination line (103a) in a predetermined plane (P) and a second focusing means (105b) arranged for focusing a second light beam (Bb) and producing a second focused light beam (Bbf) which is shaped as a second illumination line (103b) in said predetermined plane (P), said first (Baf) and said second (Bbf) focused light beams at least partly overlapping one another in said working plane (F).

8. Optical scanner according to claim 7 furthermore comprising a beam splitter (111), first optical means (112a, 113a), and second optical means (112b, 112c, 113b), said beam splitter (111) being arranged to split the light beam (B) from a single light source (101) and to produce said first light beam (Ba) and said second light beam (Bb), said first optical means being arranged to direct said first light beam (Ba) to said first focusing means (105a) and said second optical means being arranged to direct said second light beam (Bb) to said second focusing means (105b).

9. Optical scanner according to claim 6 wherein said working plane indicator means comprise a leg (402) which is slidable supported by a slot (401) in a housing (400) of the scanner and can be pulled out to extend from said housing to said working plane (F), latching means (403, 404, 405) being provided to latch said leg (402) in its working plane position.

# fig-1

# fig-2

# fig-3

# Fig-4

# Fig-5

Fig-6

Fig-7

Fig-8

fig-9

fig-10

# fig-11a

401

405

400

XIb

402

X

F

XIb

# fig-11b

402  404  405  400

406  403

European Patent Office

**EUROPEAN SEARCH REPORT**

Application Number

EP 95 20 2846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 627 705 (TOKYO ELECTRIC CO LTD) 7 December 1994<br>* column 13, line 46 - column 14, line 51; figure 17 *<br>* column 7, line 8-10 *<br>--- | 1,2,4 | G06K7/10 |
| A | IEEE SPECTRUM, MARCH 1989, USA,<br>vol. 26, no. 3, ISSN 0018-9235,<br>pages 39-43, XP000074814<br>INAGAKI T: "Hologram lenses lead to compact scanners"<br>* page 39, right-hand column, line 27 - page 40, left-hand column, line 52; figure 3 *<br>--- | 1,3 | |
| A | EP-A-0 162 582 (TOKYO SHIBAURA ELECTRIC CO) 27 November 1985<br>* claims 1,2; figure 1 *<br>--- | 1,6,9 | |
| A | IBM TECHNICAL DISCLOSURE BULLETIN,<br>vol. 25, no. 6, November 1982, ARMONK,<br>pages 2738-2739, XP002001096<br>W. RUPPERT: "OPTICAL TEST HEAD WITH FLARE COMPENSATION"<br>/* whole document */<br>--- | 1 | TECHNICAL FIELDS SEARCHED (Int.Cl.6)<br>G06K |
| A | PATENT ABSTRACTS OF JAPAN<br>vol. 012, no. 458 (P-794), 2 December 1988<br>& JP-A-63 180811 (OPT:KK), 25 July 1988,<br>* abstract *<br>--- | 1,2,4,5,8 | |
| A | PATENT ABSTRACTS OF JAPAN<br>vol. 015, no. 176 (P-1198), 7 May 1991<br>& JP-A-03 039606 (YOKOGAWA ELECTRIC CORP), 20 February 1991,<br>* abstract *<br>----- | 1,2,4,5,8 | |

The present search report has been drawn up for all claims

| Place of search | Date of completion of the search | Examiner |
|---|---|---|
| THE HAGUE | 22 April 1996 | Veen, G |